# EUROPÄISCHE PATENTSCHRIFT

(11) **EP 0 932 927 B1**
(45) Veröffentlichungstag und Bekanntmachung des Hinweises auf die Patenterteilung: **21.04.2004**
(21) Anmeldenummer: 97946731.3
(22) Anmeldetag: 17.10.1997
(51) Int. Cl.: H02M 3/158, G05F 3/22

(54) **STEUERGERÄT MIT RUHESTROMREDUZIERUNG**
CONTROL APPARATUS WITH REDUCED QUIESCENT CURRENT
APPAREIL DE COMMANDE AVEC REDUCTION DU COURANT DE REPOS

(30) Priorität: 17.10.1996 DE 19642845
(43) Veröffentlichungstag der Anmeldung: 04.08.1999
(73) Patentinhaber: ROBERT BOSCH GMBH, 70442 Stuttgart (DE)
(72) Erfinder: MOHR, Thomas, D-77830 Bühlertal (DE)
(86) Internationale Anmeldenummer: PCT/DE1997/002399
(87) Internationale Veröffentlichungsnummer: WO 1998/018196

(56) Entgegenhaltungen:
- WO-A-93/04422
- US-A- 4 692 688
- US-A- 5 414 340
- US-A- 5 523 940
- US-A- 5 532 914

## Beschreibung

### Stand der Technik

Die Erfindung bezieht sich auf ein Steuergerät mit einer Ausgangsstufe, die eine definierte Versorgungsspannung für eine nachfolgende elektronische Schaltung bereitstellt, und einer der Ausgangsstufe vorgeschaltete Schaltungsstufe zur Herabsetzung des von einer Spannungsquelle gelieferten Ruhestroms.

Ein Steuergerät mit den Merkmalen des Oberbegriffes des Anspruchs 1 ist aus der US 5 532 914 bekannt geworden.

Bei Steuergeräten, die dauernd mit Batteriespannung versorgt sind, wird eine Ruhestromaufnahme von 100 µa bis 500 µa gefordert. Insbesondere der untere Wert kann mit herkömmlichen Spannungsreglern nicht realisiert werden.

### Vorteile der Erfindung

Der Erfindung liegt die Aufgabe zugrunde, ein Steuergerät der eingangs angegebenen Art bereitzustellen, mit dem eine Reduzierung des Ruhestroms deutlich unter herkömmliche Werte erreicht wird.

Diese Aufgabe wird mit den im Patentanspruch 1 angegebenen Merkmalen gelöst. Hiemach ist also vorgesehen, daß die Schaltungsstufe einen elektronischen Schalter aufweist, der mittels eines von einer Steuerschaltung gelieferten Sollwertsignals in den offenen oder geschlossenen Zustand steuerbar ist. Indem der elektronische Schalter, der der Ausgangsstufe vorgeschaltet ist, die die Versorgungsspannung für die nachfolgende elektronische Schaltung liefert, in den offenen Zustand steuerbar ist, wird der Ruhestrom im inaktiven Zustand der elektronischen Schaltung auf Werte reduzierbar, die wesentlich unter 100 µA liegen. Zum Aktivieren der elektronischen Schaltung wird der Schalter in den geschlossenen Zustand gesteuert.

Erfindungsgemäß ist das Sollwertsignal ein pulsbreitenmoduliertes digitales Signal und der elektronische Schatter in einem vorgegebene Bereich des Tastverhältnisses des pulsbreitenmodulierten Signals geschlossen.

Ein einfacher Aufbau des Steuergeräts zum Reduzieren des Ruhestroms besteht darin, daß der Schalter ein Transistor ist, der mit seinem Emitter an den Pluspol der Spannungsquelle und mit seinem Kollektor an die Ausgangsstufe angeschlossen ist, daß zwischen einem das Sollwertsignal liefernden Ausgang der Steuerschaltung und dem Emitter ein Kondensator und eine Diode in Reihe geschaltet sind, wobei die Diode mit ihrer Kathode an den Anschluß der Steuerschaltung und mit ihrer Anode an den einen Anschluß des Kondensators angeschlossen ist, dessen anderer Anschluß an dem Emitter liegt, und daß die Basis des Transistors über einen Widerstand zwischen der Diode und dem Kondensator angeschlossen ist. Hierbei ist zum Erzielen eines definierten Zustands vorteilhaft, daß parallel zu der Reihenschaltung aus dem Kondensator und der Diode ein weiterer Widerstand geschaltet ist.

Ist vorgesehen, daß die von dem Kondensator und dem Widerstand gebildete Zeitkonstante und die Impulsdauer so groß bemessen sind, daß der Schalter in Form des Transistors während der Impulsdauer im aktivierten Zustand der elektronischen Schaltung im geschlossenen Zustand bleibt, so wird mit einfachen Maßnahmen sichergestellt, daß im aktiven Zustand der nachfolgenden elektronischen Schaltung diese aus der Ausgangsstufe mit der definierten Versorgungsspannung versorgt wird.

Alternativ zu dem pulsbreiten modulierten digitalen Signal kann das Sollwertsignal auch als ein analoges Signal vorgegeben werden. Gegenüber dem in dem Anspruch 3 näher angegebenen Aufbau kann dann auf den Kondensator und die Diode verzichtet werden, und der Widerstand wird mit seinem von der Basis abgelegenen Anschluß an den Anschluß für das Sollwertsignal gelegt.

Die Erfindung wird nachfolgend anhand eines Ausführungsbeispiels unter Bezugnahme auf die Zeichnungen näher erläutert. Es zeigen:
- Fig. 1: einen schematischen Schaltungsaufbau des Steuergeräts und
- Fig. 2: Signalverläufe der Spannungen an den Punkten A und B gemäß Fig. 1.

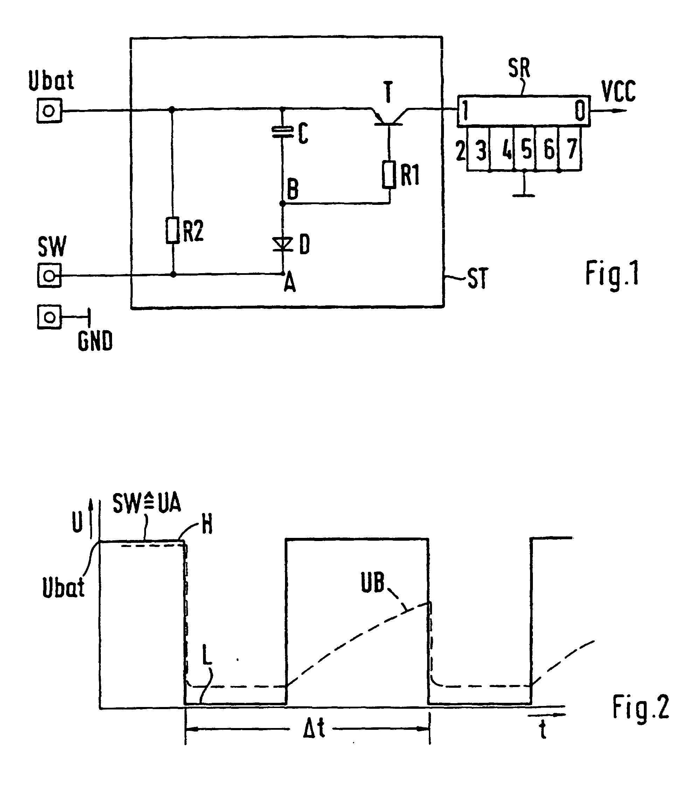

In Fig. 1 ist der Schaltungsaufbau eines Steuergeräts schematisch dargestellt. Ein Spannungsregler SR liefert eine Versorgungsspannung VCC für eine nachfolgende elektronische Schaltung, wie z.B. einen Mikrocontroller oder Mikroprozessor. Zwischen eine Spannungsquelle, die eine Batteriespannung Ubat liefert, und den Spannungsregler SR ist eine Schaltungsstufe ST geschaltet, mit der der Ruhestrom des Spannungsreglers SR im nicht aktiven Zustand der elektronischen Schaltung minimiert wird.

Die Schaltungsstufe ST weist als elektronischen Schalter einen Transistor T auf, der mit seinem Emitter an den Pluspol der Spannungsquelle und mit seinem Kollektor an den Spannungsregler SR angeschlossen ist. Weiterhin ist die Schaltungsstufe ST eingangsseitig an einen Anschluß einer z.B. externen Steuerschaltung angeschlossen, die ein Sollwertsignal SW liefert. Zwischen dem das Sollwertsignal liefernden Anschluß und dem Emitter des Transistors T ist zum einen eine Reihenschaltung aus einem Kondensator C und einer Diode D geschaltet, wobei die Diode D mit ihrer Anode an den Kondensator C und mit ihrer Kathode über Punkt A an den Anschluß der Steuerschaltung gelegt ist. Die Basis des Transistors T ist über einen Widerstand R1 zwischen dem Kondensator C und der Diode D an einem Punkt B angeschlossen. Parallel zu der Reihenschaltung aus dem Kondensator C und der Diode D ist ein weiterer Widerstand R2 gelegt. Als Bezugspotential dient die Masse GND.

In Fig. 2 sind Verläufe der Spannung U über der Zeit t an den Punkten A und B nach Fig. 1 aufgetragen. Während einer Periodendauer Δt des Sollwertsignals SW, d.h. des Spannungsverlaufs UA an dem Punkt A, befindet sich das Sollwertsignal SW zunächst auf L-Pegel und nimmt im weiteren Verlauf H-Pegel an, der bei der Batteriespannung Ubat liegt.

Sobald das Sollwertsignal SW aus einem anfänglichen Ruhezustand auf den L-Pegel abfällt, ändert sich mit lediglich geringer zeitlicher Verzögerung die Spannung an Punkt B, die um die Knickspannung der Diode D oberhalb des L-Pegels liegt. Ab dem Zeitpunkt, in dem das Sollwertsignal SW wieder H-Pegel annimmt, fließt ein Basisstrom über den Widerstand R1 und lädt den Kondensator C, bis das Sollwertsignal SW wieder auf den L-Pegel abfällt. Zu diesem Zeitpunkt liegt die Spannung an dem Punkt B aufgrund der Impulsbreite und der Zeitkonstante CR1 noch mindestens soweit unter der Batteriespannung Ubat, daß der Transistor T durchgeschaltet bleibt und der Spannungsregler SR und damit die nachfolgende elektronische Schaltung versorgt werden. Solange das Sollwertsignal SW auf H-Pegel liegt, befindet sich die Diode D im Sperrzustand. Bei L-Pegel des Sollwertsignals SW befindet sich die Diode im Durchlaßzustand.

Um den Schalter in Form des Transistors T in den geöffneten Zustand zu bringen, wird das Sollwertsignal auf H-Pegel gelegt und dort gehalten. Der Sollwert wird auch auf Batteriespannung Ubat bei ausgeschaltetem Steuergerät gehalten. Bei eingeschaltetem Steuergerät können die Impulsbreiten beispielsweise von 5 bis 95 % der Periodendauer variiert werden.

Der Vorteil, der mit der Schaltungsstufe ST erzielt wird, liegt in der geringen Ruhestromaufnahme, die mit bekannten Spannungsregiern nicht realisierbar ist. Mit der genannten Schaltungsstufe können herkömmliche, kostengünstige Spannungsregler eingesetzt werden.

Alternativ kann zum Ansteuern des elektronischen Schalters auch ein analoges Signal herangezogen werden. In diesem Fall können der in Fig. 1 dargestellte Kondensator C und die Diode D entfallen.

## Patentansprüche

1. Steuergerät mit einer Ausgangsstufe (SR), die eine definierte Versorgungsspannung (VCC) für eine nachfolgende elektronische Schaltung bereitstellt, und mit einer der Ausgangsstufe (SR) vorgeschalteten Schaltungsstufe (ST) zur Herabsetzung des von einer Spannungsquelle (Ubat) gelieferten Ruhestroms, wobei die Schaltungsstufe (ST) einen elektronischen Schalter (T) aufweist, der mittels eines von einer Steuerschaltung gelieferten Sollwertsignals (SW) in den offenen oder geschlossenen Zustand steuerbar ist, **dadurch gekennzeichnet, daß** das Sollwertsignal (SW) ein pulsbreiten moduliertes digitales Signal ist,
und daß der elektronische Schalter (T) in einem vorgegebenen Bereich des Tastverhältnisses des pulsbreitenmodulierten Signals geschlossen ist.

2. Steuergerät nach Anspruch 1,
**dadurch gekennzeichnet,**
**daß** der Schalter ein Transistor (T) ist, der mit seinem Emitter an den Pluspol (Ubat) der Spannungsquelle und mit seinem Kollektor an die Ausgangsstufe angeschlossen ist,
**daß** zwischen einem das Sollwertsignal (SW) liefernden Ausgang der Steuerschaltung und dem Emitter ein Kondensator (C) und eine Diode (D) in Reihe geschaltet sind, wobei die Diode (D) mit ihrer Kathode an den Anschluß der Steuerschaltung und mit ihrer Anode an den einen Anschluß des Kondensators (C) angeschlossen ist, dessen anderer Anschluß an dem Emitter liegt, und
**daß** die Basis des Transistors (T) über einen Widerstand (R1) zwischen der Diode (D) und dem Kondensator (C) angeschlossen ist.

3. Steuergerät nach Anspruch 2,
**dadurch gekennzeichnet,**
**daß** parallel zu der Reihenschaltung aus dem Kondensator (C) und der Diode (D) ein weiterer Widerstand (R2) geschaltet ist.

4. Steuergerät nach einem der Ansprüche 2 bis 3,
**dadurch gekennzeichnet,**
**daß** die von dem Kondensator (C) und dem Widerstand (R1) gebildete Zeitkonstante und die Impulsdauer so groß bemessen sind, daß der Schalter (S) in Form des Transistors während der Impulsdauer im aktivierten Zustand der elektronischen Schaltung im geschlossenen Zustand bleibt.

5. Steuergerät nach Anspruch 1,
**dadurch gekennzeichnet,**
**daß** das Sollwertsignal ein analoges Signal ist.

## Claims

1. Controller having an output stage (SR), which provides a defined supply voltage (VCC) for a downstream electronic circuit, and having a circuit stage (ST) which is connected upstream of the output stage (SR) in order to reduce the quiescent current which is supplied from a voltage source (Ubat), with the circuit stage (ST) having an electronic switch (T) which can be controlled to be open or closed by means of a nominal value signal (SW) which is supplied from a control circuit, **characterized in that** the nominal value signal (SW) is a pulse-width modulated digital signal, and **in that** the electronic switch (T) is closed in a predetermined range of the duty ratio of the pulse-width modulated signal.

2. Controller according to Claim 1,
**characterized**
**in that** the switch is a transistor (T), whose emitter is connected to the positive pole (Ubat) of the voltage source, and whose collector is connected to the output stage,
**in that** a capacitor (C) and a diode (D) are connected in series between the emitter and an output of the control circuit which supplies the nominal value signal (SW), with the cathode of the diode (D) being connected to the connection of the control circuit and its anode being connected to one connection of the capacitor (C), whose other connection is connected to the emitter, and in that the base of the transistor (T) is connected via a resistor (R1) between the diode (D) and the capacitor (C).

3. Controller according to Claim 2,
**characterized**
**in that** a further resistor (R2) is connected in parallel with the series circuit formed by the capacitor (C) and the diode (D).

4. Controller according to one of Claims 2 or 3,
**characterized**
**in that** the time constant which is formed by the capacitor (C) and the resistor (R1), and the pulse duration are designed to be sufficiently long that the switch (S), which is in the form of a transistor, remains in the closed state during the pulse duration while the electronic circuit is in the activated state.

5. Controller according to Claim 1,
**characterized**
**in that** the nominal value signal is an analogue signal.

## Revendications

1. Appareil de commande comportant un étage de sortie (SR), qui met à disposition une tension d'alimentation définie (VCC) pour un circuit électronique en aval, un étage de commutation (ST) en amont de l'étage de sortie (SR) permettant de réduire le courant de repos fourni par une source de tension (Ubat), l'étage de commutation (ST) présentant un commutateur électronique (T) qui peut être commandé dans son état ouvert ou fermé au moyen d'un signal de consigne (SW) envoyé par un circuit de commande,
**caractérisé en ce que**
le signal de consigne (SW) est un signal numérique modulé à impulsions, et
le commutateur électronique (T) est fermé dans une plage prédéterminée du taux d'impulsions du signal modulé en largeur d'impulsions.

2. Appareil de commande selon la revendication 1,
**caractérisé en ce que**
le commutateur est un transistor (T) qui est raccordé par son émetteur au pôle positif (Ubat) de la source de tension et par son collecteur à l'étage de sortie,
entre une sortie du circuit de commande envoyant le signal de consigne (SW) et l'émetteur, un condensateur (C) et une diode (D) sont branchés en série, la diode (D) étant raccordée par sa cathode à la connexion du circuit de commande et par son anode à la première connexion du condensateur (C), dont l'autre connexion se trouve sur l'émetteur, et
la base du transistor (T) est raccordée entre la diode (D) et le condensateur (C) par le biais d'une résistance (R1).

3. Appareil de commande selon la revendication 2,
**caractérisé en ce qu'**
une autre résistance (R2) est mise en parallèle avec le circuit en série composé du condensateur (C) et de la diode (D).

4. Appareil de commande selon l'une des revendications 2 et 3,
**caractérisé en ce que**
la constante de temps formée par le condensateur (C) et la résistance (R1), ainsi que la durée d'impulsions, sont dimensionnées de sorte que le commutateur (S) sous la forme du transistor reste dans son état fermé pendant la durée d'impulsion, dans l'état activé du circuit électronique.

5. Appareil de commande selon la revendication 1,
**caractérisé en ce que**
le signal de consigne est un signal analogique.
